# EUROPEAN PATENT SPECIFICATION

(11) **EP 3 736 548 B1**
(45) Date of publication and mention of the grant of the patent: **24.08.2022**
(21) Application number: 19173814.5
(22) Date of filing: 10.05.2019
(51) Int. Cl.: G01F 25/20, A01D 43/08

(54) **FUEL LEVEL MONITORING SYSTEM FOR A FIELD VEHICLE**
KRAFTSTOFFSTANDÜBERWACHUNGSSYSTEM FÜR EIN FELDFAHRZEUG
SYSTÈME DE SURVEILLANCE DE NIVEAU DE CARBURANT POUR UN VÉHICULE DE TERRAIN

(43) Date of publication of application: 11.11.2020
(73) Proprietor: CNH Industrial Belgium N.V., 8210 Zedelgem (BE)
(72) Inventor: Molenaers, Koen, 8820 Torhout (BE)
(74) Representative: CNH Industrial IP Department

(56) References cited:
- DE-A1-102017 203 312
- DE-T2- 69 324 648
- US-A1- 2018 335 297
- US-B2- 8 175 856
- KOCH P: "SIMPLE PROGRAM CALCULATES PARTIAL LIQUID VOLUMES IN VESSELS", OIL AND GAS JOURNAL, PENNWELL, HOUSTON, TX, US, vol. 90, no. 15, 13 April 1992 (1992-04-13), pages 54-57, XP000263676, ISSN: 0030-1388

## Description

### TECHNICAL FIELD

The present disclosure relates to a fuel level monitoring system for a field vehicle such as a forage harvester.

### BACKGROUND

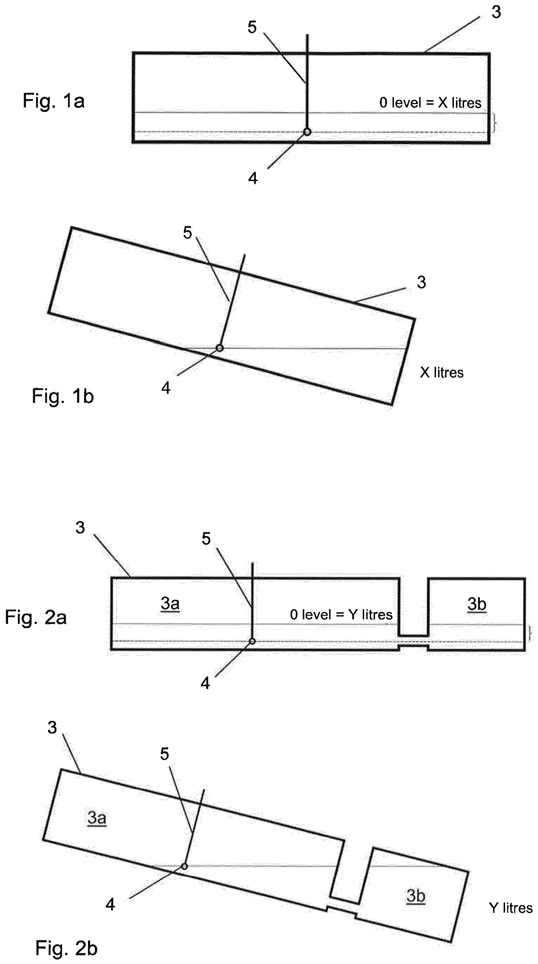

When a field vehicle such as a forage harvester (also known as a silage harvester, forager or chopper) is operated on flat, level ground, the fuel within the fuel tank 3 of the field vehicle will generally cover an outlet 4 located near the base of the fuel tank thereby enabling fuel to be extracted as long as there is still fuel within the fuel tank, as schematically illustrated in Figure 1a. However, field vehicles may also from time to time be required to operate on a significant incline. When a field vehicle is operated on an incline, the fuel in the fuel tank 3 will naturally move towards the lower side of the fuel tank, as schematically illustrated in Figure 1b. If the field vehicle is operated on a sufficiently steep incline then the fuel in the fuel tank 3 may no longer cover the outlet 4 even if a significant volume of fuel still remains within the fuel tank 3. In this case, it may no longer be possible to extract fuel from the fuel tank 3, and so the field vehicle may be at risk of becoming stranded.

In order to reduce the probability of field vehicles becoming stranded, the fuel level monitoring systems of field vehicles are typically calibrated to under-report the actual volume of fuel remaining in the fuel tank 3. In particular, the fuel level monitoring systems of field vehicles may be calibrated with a zero level (that is the measured fuel level at which the fuel tank 3 is indicated to be empty when the field vehicle is on flat level ground) that is sufficiently high to ensure that there will still be sufficient fuel in the fuel tank 3 to enable the field vehicle to operate up to a predetermined maximum angle of inclination for which reliable operation is to be guaranteed as long as the fuel level monitoring system has not yet indicated that the fuel tank 3 is empty.

For example, Figure 1b schematically illustrates a fuel tank 3 of a field vehicle at a predetermined maximum angle of inclination for which reliable operation is to be guaranteed. The minimum volume of fuel that is required in order to ensure that it will still be possible to extract fuel at this angle of inclination may be calculated based on the geometry of the fuel tank. This volume of fuel is illustrated as X litres in Figure 1b.

Figure 1a schematically illustrates the fuel tank 3 in its normal orientation, as experienced when the field vehicle is on flat, level ground, with the same volume of X litres of fuel within the fuel tank 3. If the fuel level monitoring system is calibrated to have a zero level that is equal to the fuel level measurement obtained by the fuel level sensor 5 when the fuel tank 3 is in its normal orientation and contains the minimum volume of fuel required for reliable operation at the predetermined maximum angle of inclination, as illustrated in Figure 1a, then the fuel level monitoring system will report that the fuel tank 3 is empty before the fuel volume falls below the minimum volume required for reliable operation up to the predetermined maximum angle of inclination. In this way the artificially high zero level will generally prevent the field vehicle from becoming stranded due to a lack of fuel flow (unless the field vehicle is operated beyond the predetermined maximum angle of inclination or after the fuel tank 3 has been reported to be empty).

The above-described calibration method is advantageous for preventing a field vehicle from becoming stranded by being operated on a significant incline with insufficient fuel. However, calibrating the fuel level monitoring system to intentionally under-report the actual volume of fuel remaining in the fuel tank reduces the usable volume of fuel that is visible to an operator of the vehicle, as indicated in Figures 1a and 1b, thereby reducing the range of the field vehicle and increasing the frequency at which the fuel tank will require refilling. In Fig. 1a, the accolade indicates the effective fuel loss in flat areas.

The above-described problem of reduced effective fuel tank volume may be particularly pronounced in field vehicles having fuel tanks that are comparatively wide and shallow, as is often the case with forage harvesters. This is because in fuel tanks that are comparatively wide and shallow fuel can be displaced further from the outlet than in fuel tanks that are narrower and deeper, and so a higher zero level may be required in order to meet the same steepest slope requirement. This problem may also be heightened in field vehicles having fuel tanks 3 that comprise an auxiliary chamber 3b that is in fluid communication with the main chamber 3a in which the fuel sensor 5 is located, as schematically illustrated in Figures 2a and 2b. This is because in fuel tanks 3 of this type fuel can collect in the auxiliary chamber 3b when the field vehicle is operated on an incline, and so a higher zero level (illustrated as Y litres in Figure 2b) may be required in order to meet a particular steepest slope requirement than would be necessary if the fuel tank only included a single chamber. In Fig. 2a, the accolade indicates the effective fuel loss in flat areas.

DE 693 24 648 T2 describes a method of fabricating a gauged liquid tank supplying a gauge signal with little sensitivity to the inclination of the tank.

It is an aim of the present invention to address disadvantages associated with the prior art.

### SUMMARY OF THE INVENTION

According to an aspect of the present invention there is provided a fuel level monitoring system for a field vehicle according to claim 1.

It will be appreciated that the term "measured fuel level" may refer either to a directly measured surface level of the fuel within the fuel tank, or alternatively to a calculated volume of fuel within the fuel tank. Moreover, in either case, the measured fuel level may optionally be corrected in order to take account of the natural variation in fuel level readings that are obtained for the same fuel volume at different angles of inclination due to the movement of fuel within the fuel tank.

It will further be appreciated that the calibration setting is a setting that governs the relationship between the measured fuel level and the calibrated fuel level that is communicated to an operator of the field vehicle. The calibration settings of the respective calibration modes may be defined by any suitable number of set points or any suitable equations for mapping the measured fuel level onto the calibrated fuel level.

It will further be appreciated that the control module being selectively switchable between a plurality of calibration modes having different calibration settings means that the calibration setting is adjustable during use of the field vehicle (that is while the field vehicle is in the possession of an operator) and not only during design, manufacture or initial calibration of the field vehicle.

By allowing the calibration setting to be adjusted, the present invention eliminates the need for the calibration setting to be fixed during design or manufacture of the field vehicle, and instead allows the fuel level to be indicated to an operator of the field vehicle using a calibration setting that is well suited to the environment in which the field vehicle is operating. For example if the field vehicle is operating in an area that is known to include significant inclines, then a calibration setting that under-represents the actual quantity of fuel that remains in the fuel tank can be used in order to reduce the probability of the fuel level falling below a critical level required for continued operation at a given angle of inclination. However, if the field vehicle is operating in an area that is known to be predominantly flat than a different calibration setting that provides a more accurate representation of the actual quantity of fuel that remains in the fuel tank can be used in order to increase the effective fuel tank volume that is visible to an operator of the field vehicle.

The calibration settings of the respective calibration modes comprise different zero levels. It will be appreciated that the zero level of a calibration mode is the measured fuel level at which the fuel tank is indicated to be empty when the field vehicle is on flat level ground. By enabling the fuel level monitoring system to switch between different calibration modes having different zero levels it is possible to change the amount of fuel that is guaranteed to remain in the fuel tank when the fuel level monitoring system indicates that the fuel level is low. For example, a calibration mode with a comparatively low zero level may be engaged in order to increase the effective fuel tank volume that is visible to an operator of the field vehicle. Alternatively, a calibration mode with a comparatively high zero level may be engaged in order to reduce the probability of the fuel level falling below a critical level required for continued operation at a given angle of inclination.

The calibration modes include at least one flat mode and at least one non-flat mode. The flat mode may be intended primarily for use in flat areas (for example in flat fields and in geographical regions that are known to be predominantly flat), and the non-flat mode may be intended primarily for use in non-flat areas (for example in fields and geographical regions that are known to include significant inclines). The flat mode may have a zero level that is lower than the zero level of the non-flat mode. For example, the zero level of the flat mode may correspond to an actual fuel volume that is at least 50% lower than the actual fuel volume represented by the zero level of the non-flat mode, although other values are also possible.

The calibration modes may also include at least one intermediate mode intended for use in areas with intermediate terrain characteristics. The intermediate mode may have a zero level that is higher than the zero level of the flat mode but lower than the zero level of the non-flat mode.

It will be appreciated that the flat, intermediate and non-flat calibration modes may equally be referred to by any other suitable names. For example, the flat mode may be referred to as a low zero level mode and the non-flat mode may be referred to as a high zero level mode. Moreover, it will be appreciated that it may be possible to select the "non-flat mode" while the field vehicle is operating in a generally flat area and vice-versa to thereby control the calibration settings of the fuel level monitoring system in a desired manner independently of the characteristics of the local terrain.

The control module may store the calibration modes as discrete selectable calibration modes with pre-set calibration settings. The stored calibration modes may comprise a series of calibration modes with progressively different calibration settings, for example the flat mode, intermediate mode(s) and non-flat mode described above.

Alternatively, or in addition, the control module may be configured to adjust at least one characteristic of the calibration setting in dependence on the calibration mode selection signal to thereby change the calibration mode. For example, the control module may be configured to adjust at least one set point of the calibration setting such as the zero level of the calibration setting along a scale between maximum and minimum permitted values in dependence on the calibration mode selection signal. In this case, it may not be necessary for the control module to store discrete calibration modes with pre-set calibration settings.

The calibration mode selector may be configured to generate the calibration mode selection signal in dependence on a command entered by an operator or end user of the field vehicle, for example a driver. For example, the calibration mode selector may be configured to generate a calibration mode selection signal identifying a pre-set calibration mode or identifying an adjustment to a characteristic of the calibration setting that has been requested by an operator of the vehicle. The command may be entered using any suitable input device of the field vehicle that is capable of receiving commands from an operator, for example a touch screen display or a control panel including one or more physical control elements.

Alternatively, or in addition, the calibration mode selector may be configured to generate the calibration mode selection signal in dependence on an identified geographical area. For example, the calibration mode selector may be configured to identify the geographical area in which the field vehicle is located (or towards which the field vehicle is heading), and to generate a calibration mode selection signal identifying a pre-set calibration mode or identifying an adjustment to a characteristic of the calibration setting based on the terrain characteristics of the identified geographical area. It will be appreciated that the term "area" does not refer to a precise instantaneous location of the field vehicle, but rather to a broader area such as a field or a geographical region in which the field vehicle may be operated. Therefore the calibration mode is not changed continuously based on the instantaneous location of the field vehicle, but is instead set to match the general characteristics of the local terrain.

In some embodiments, the fuel level monitoring system may be configured to change the calibration mode automatically without requiring any input from an operator of the field vehicle, although in other embodiments the fuel level monitoring system may be configured to may be configured to request manual confirmation from the operator before changing the calibration mode.

The control module may be configured to continue to operate in the selected calibration mode until a further calibration mode selection signal has been received, the further calibration mode selection signal being indicative of a different calibration mode. The control module may be configured to continue to operate in the selected calibration mode irrespective of the current or instantaneous angle of inclination of the field vehicle.

The fuel level monitoring system may further comprise an interface system that is configured to provide an indication of the current fuel level of the fuel tank to an operator of the field vehicle in dependence on the output signal indicative of the calibrated fuel level. The interface system may comprise a display device such as a display screen or a gauge that is configured to display the current fuel level and/or a notification device such as a warning light or a speaker that is configured to provide a low fuel level warning.

According to a further aspect of the present invention there is provided a field vehicle comprising a fuel level monitoring system as described above. It will be appreciated field vehicles are vehicles that are designed and intended to perform agricultural work in field environments. The field vehicle may, for example, be a forage harvester, also known as a silage harvester, forager or chopper. It will be appreciated that the present invention may also be applied to other types of field vehicle, including, for example, combine harvesters. However, the present invention may be especially advantageous when applied to forager harvesters because forage harvesters often include fuel tanks that are comparatively wide and shallow and may therefore require a comparatively high zero level in order to ensure that sufficient fuel remains in the fuel tank to enable the field vehicle to be operated on a given incline. The fuel tank may have a depth that is significantly lower, for example, at least 50% lower, than a longitudinal or transverse extent of the fuel tank.

The fuel tank of the field vehicle may comprise a first storage chamber in which the fuel sensor is located, and a second storage chamber that is in fluid communication with the first storage chamber. It will be appreciated that the present invention may also be applied to field vehicles in which the fuel tank only includes a single fuel tank that is not divided into separate first and second storage chambers. However, the present invention may be especially advantageous when applied to field vehicles in which the fuel tank comprises an auxiliary chamber in addition to the main chamber in which the fuel level is measured because fuel tanks of this type may require a comparatively high zero level in order to ensure that sufficient fuel remains in the fuel tank to enable the field vehicle to be operated on a given incline. The second storage chamber may optionally have a lower capacity than the first storage chamber, and may be provided at any suitable location relative to the first storage chamber.

According to a further aspect of the present invention there is provided a method of monitoring a fuel level in a fuel tank of a field vehicle according to claim 10.

The calibration mode may be selected manually by an operator of the field vehicle. In this case the calibration mode may be selected using any suitable input device of the field vehicle, for example a touch screen display or a control panel including one or more physical control elements.

Alternatively, the calibration mode may be selected automatically in dependence on an identified geographical area. In this case, the automatically selected calibration mode may optionally be confirmed manually by an operator of the field vehicle.

The step of providing an indication of the current fuel level of the fuel tank may comprise operating a display device such as a display screen or a gauge to display the current fuel level. Alternatively, or in addition, the step of providing an indication of the current fuel level of the fuel tank may comprise operating a notification device such as a warning light or a speaker to provide a low fuel level warning.

The method may further comprise any steps associated with normal operation of a fuel level monitoring system as described above in connection with the first aspect of the present invention.

### BRIEF DESCRIPTION OF THE DRAWINGS

One or more embodiments of the invention will now be described, by way of example only, with reference to the accompanying drawings, in which:
Figures 1a and 1b schematically illustrate a fuel tank of a field vehicle a) when the field vehicle is on flat, level ground and b) when the field vehicle is on an incline;
Figures 2a and 2b schematically illustrate an alternative fuel tank arrangement of a field vehicle a) when the field vehicle is on flat, level ground and b) when the field vehicle is on an incline;
Figure 3 schematically illustrates a forage harvester comprising a fuel level monitoring system according to one possible embodiment of the present invention; and
Figure 4 schematically illustrates the fuel level monitoring system of the forage harvester illustrated in Figure 3.

### DETAILED DESCRIPTION

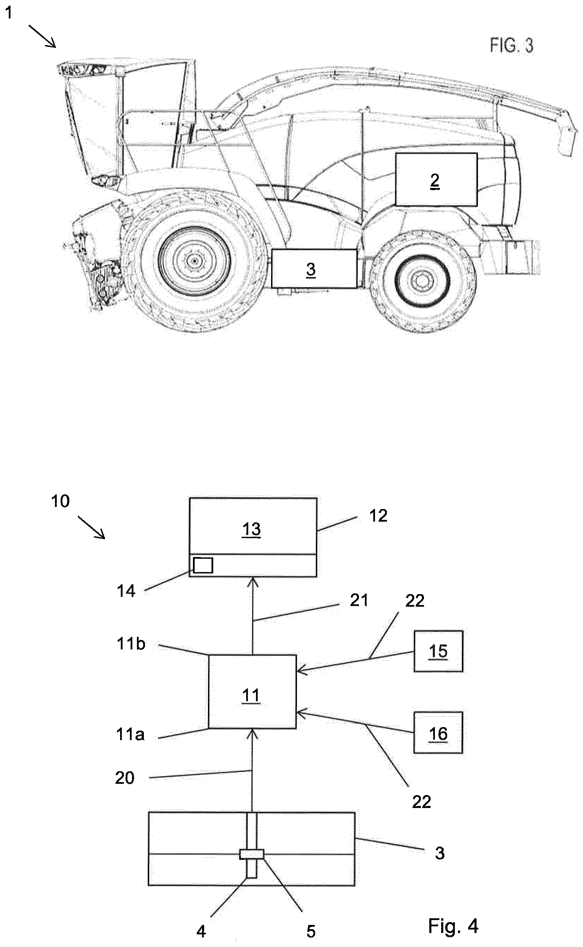

Figure 3 schematically illustrates a forage harvester 1 comprising a fuel level monitoring system 10 in accordance with one possible embodiment of the present invention. The forage harvester 1 comprises an internal combustion engine 2 for propelling the forage harvester 1 in use, and a fuel tank 3 for storing fuel to be supplied to the internal combustion engine 2. The fuel tank 3 is illustrated schematically in isolation in Figures 2a and 2b, and the fuel level monitoring system 10 is illustrated schematically in Figure 4. The remaining features of the forage harvester 1, including the silage cutting and processing stages, are conventional and well known to the skilled person, and so are not described in more detail.

As shown in Figures 2a and 2b, the fuel tank 3 comprises a main storage chamber 3a and an auxiliary chamber 3b that is in fluid communication with the main storage chamber 3a. The main storage chamber 3a is comparatively wide and shallow in design, and may be provided at any suitable location within the forage harvester 1. The auxiliary chamber 3b is smaller than the main storage chamber 3a, and may be provided at any suitable location relative to the main storage chamber 3a, for example in front of, to the rear of or to the side of the main storage chamber 3a. The purpose of the auxiliary chamber 3b is to increase the total capacity of the fuel tank 3.

The fuel tank 3 further comprises an outlet 4 through which fuel may be extracted for supply to the internal combustion engine 2. The outlet 4 is located adjacent to the lower wall of the main storage chamber 3a at an approximately central location.

The fuel tank 3 is provided with a fuel level sensor 5. In the present embodiment the fuel level sensor 5 is a vertical float type level sensor comprising a vertically extending shaft mounted at an approximately central location within the main storage chamber 3a, and a float that is slidingly mounted on the shaft and configured to selectively open and close a series of reed contacts to thereby change the resistance of the fuel level sensor 5 in dependence on the position of the float along the shaft. The fuel level sensor 5 is configured to generate a sensor signal 20 indicative of a measured fuel level in the fuel tank 3 based on the resistance of the fuel level sensor 5. In the present embodiment, the sensor signal 20 is based directly on the position of the float along the shaft, and so represents the level of the surface of the fuel at the location of the fuel level sensor 5.

In the embodiment illustrated in Figures 2a and 2b the outlet 4 of the fuel tank 3 is integrated with the shaft of the fuel level sensor 5 adjacent to a lower end of the shaft. In this case, fuel may be extracted from the fuel tank 3 through the shaft of the fuel level sensor 5. However, it will be appreciated that in other embodiments the outlet 4 of the fuel tank 3 may equally be provided separately to the fuel level sensor 5, for example through the lower wall of the fuel tank 3.

As shown in Figure 4, the fuel level monitoring system 10 comprises a control module 11 having an input 11a that is configured to receive the sensor signal 20 indicative of the measured fuel level from the fuel level sensor 5. The control module 11 may optionally be configured to apply a correction to the measured fuel level as detected by the fuel level sensor 5 in dependence on the current angle of inclination of the forage harvester 1 in order to take account of the natural variation in fuel level readings that are obtained for the same fuel volume at different angles of inclination due to the movement of fuel within the fuel tank 3. In either case, the control module 11 is configured to calculate a calibrated fuel level in dependence on the measured fuel level (either as originally detected by the fuel level sensor or as corrected) and further in dependence on a calibration setting applied by the control module 11, as described in more detail below.

The control module 11 further comprises an output 11b that is configured to output a signal 21 indicative of the calibrated fuel level to an interface system 12. The interface system 12 comprises a display device 13 such as a display screen or a fuel gauge that is located within the cabin of the forage harvester 1 and configured to display the calibrated fuel level to a driver of the forage harvester 1. The interface system 12 may also include a notification device 14 such as a warning light or a speaker that is configured to provide a low fuel level warning if the calibrated fuel level falls below a warning threshold.

In accordance with an embodiment of the present invention, the control module 11 stores at least two different calibration modes each including different calibration settings that govern the relationship between the measured fuel level (as measured by the fuel level sensor 5) and the calibrated fuel level which is displayed to the driver of the forage harvester 1. The calibration settings of the respective calibration modes may be defined by any suitable number of set points or any suitable equations for mapping the measured fuel level onto the calibrated fuel level, and each define a zero level at which the fuel tank 3 is indicated to be empty when the forage harvester 1 is on flat level ground.

The stored calibration modes include at least a flat mode that is intended primarily for use in areas that are predominantly flat, and a non-flat mode that is intended primarily for use in areas that include significant inclines. The calibration settings of the flat mode and the non-flat modes define different zero levels, with the zero level of the flat mode being significantly lower than the zero level of the non-flat mode. The stored calibration modes may optionally further comprise at least one intermediate mode having a zero level that is higher than the zero level of the flat mode but lower than the zero level of the non-flat mode.

The fuel level monitoring system 10 further comprises an input system 15 located within the cabin of the forage harvester 1 for allowing the driver to select a desired calibration mode from the calibration modes stored by the control module 11. The input system 15 may, for example, comprise a touch screen display via which the driver may select the desired calibration mode from a menu, or alternatively one or more physical control elements such as buttons corresponding to the respective calibration modes. In either case, the input system 15 is configured to receive a command from the driver indicative of a desired calibration mode, and to generate a calibration mode selection signal 22 identifying the selected calibration mode.

The control module 11 is configured to receive the calibration mode selection signal 22 generated by the input system 15, and to activate the selected calibration mode in dependence on the received calibration mode selection signal 22. The calibration settings of the selected calibration mode are then used in calculating the calibrated fuel level until a different calibration made has been selected using the input system 15. In this way, it is possible for the driver of the forage harvester 1 to selectively switch the fuel level monitoring system 10 between the plurality of stored calibration modes to suit the environment in which the forage harvester 1 is working.

For example, if the forage harvester 1 is operating in an environment that is known to be predominantly flat then the flat mode may be selected, in which case the fuel level monitoring system 10 will not indicate that the fuel tank 3 is empty until the actual fuel level in the fuel tank 3 has fallen below the comparatively low zero level of the flat mode. In this case the effective fuel tank volume that is visible to the driver is maximised.

In contrast, if the forage harvester 1 is operating in an environment that is known to include significant inclines then the non-flat mode may be selected, in which case the fuel level monitoring system 10 will indicate that the fuel tank 3 is empty when the actual fuel level reaches the comparatively higher zero level of the non-flat mode. In this case the driver of the forage harvester 1 will be prompted to refill the fuel tank 3 while a comparatively larger volume of fuel remains in the fuel tank 3, thereby making it less likely that the fuel volume will fall below the minimum volume required in order to permit continued operation of the forage harvester 1 on an incline.

In one particular example the zero level of the non-flat mode may be set to correspond to the fuel level measurement obtained by the fuel level sensor 5 when the forage harvester 1 is on flat level ground and the volume of fuel within the fuel tank 3 is equal to the volume of fuel that is required for reliable operation at a predetermined maximum angle of inclination. In this case, it can be ensured that there will still be sufficient fuel in the fuel tank 3 to enable the forage harvester 1 to operate up to the predetermined maximum angle of inclination as long as the non-flat mode is engaged and the fuel level monitoring system has not yet indicated that the fuel tank 3 is empty.

In some embodiments, the fuel level monitoring system 10 may further comprise an additional mode selector that is configured to change the calibration mode automatically in dependence on the geographical area in which the forage harvester is operating. For example, as also illustrated in Figure 4, the fuel level monitoring system 10 may additionally comprise a location module 16, for example a GPS location module, that is configured to detect the location of the forage harvester 1, and to identify the geographical area (for example the field or region) in which the forage harvester 1 is operating. The location module 16 may further be configured to generate a calibration mode selection signal 22 identifying a calibration mode that is suitable for use in the identified geographical area based on the local terrain characteristics. The calibration mode may, for example, be selected using a pre-configured database including terrain information, or alternatively based on historic data generated by the forage harvester during previous periods of operation in the identified geographical area. In this way, the calibration mode may be adjusted automatically to suit the terrain characteristics of the local area. However, the control module 11 may optionally be configured to request manual confirmation from the driver before permitting a change in the selected calibration mode.

The above description relates to one possible embodiment of the present invention. However, many modifications may be made to the above example without departing from the scope of the present invention as defined in the accompanying claims.

For example, the present invention may also be applied to other types of field vehicle besides forage harvesters, including field vehicles having different fuel tank configurations and different fuel level sensors to those described above.

In addition, in the above-described embodiment, the fuel level monitoring system 10 is configured to selectively switch between discrete selectable calibration modes with pre-set calibration settings. However, in other examples the fuel level monitoring system 10 may alternatively, or additionally, be configured to adjust at least one characteristic of the calibration setting to thereby change the calibration mode. For example, the fuel level monitoring system 10 may be configured to permit the driver to manually adjust the zero level along a scale between maximum and minimum permitted values using the input system, or alternatively may be configured to adjust the zero level along a scale automatically in dependence on the geographical area in which the forage harvester is operating, to thereby change the calibration mode.

The above description refers to various control modules and systems, including the main control module 11, the interface system 12, the input system 15, and the location module 16. For ease of reference these control modules and systems are described and illustrated as being discrete and self-contained units that are in communication with each other. However, it will be appreciated that the above-described control modules and systems may be formed by any suitable arrangement of processors and memory modules provided at any suitable location or locations within the field vehicle, and may be integrated with each other in any suitable manner as part of the overall control system of the field vehicle. In addition, the above description refers to various different signals being outputted by particular control modules and systems. However, it will be appreciated that the above-described signals may be generated and processed internally within the overall control system of the forage harvester in any suitable manner.

## Claims

1. A fuel level monitoring system (10) for a field vehicle (1), the fuel level monitoring system comprising:
a fuel level sensor (5) that is configured to generate a sensor signal (20) indicative of a measured fuel level in a fuel tank (3) of the field vehicle (1); and
a control module (11) comprising an input (11a) that is configured to receive the sensor signal (20) and an output (11b) that is configured to generate an output signal (21) in dependence on the measured fuel level;
**characterized in that** the fuel level monitoring system (10) further comprises a calibration mode selector (15, 16) that is configured to generate a calibration mode selection signal (22) indicative of a selected calibration mode, wherein the calibration modes include at least one flat mode intended primarily for use in flat areas and at least one non-flat mode intended primarily for use in non-flat areas, the input (11a) of the control module (11) being configured to receive the calibration mode selection signal (22), the control module (11) being configured to selectively switch between a plurality of calibration modes having different calibration settings in dependence on the calibration mode selection signal (22) and the output (11b) of the control module (11) being configured to output the signal (21) indicative of a calibrated fuel level in dependence on the calibration setting of the selected calibration mode, wherein calibration settings of the respective calibration modes comprise different zero levels.

2. A fuel level monitoring system (10) according to any preceding claim, wherein the control module (11) stores the calibration modes as discrete selectable calibration modes with pre-set calibration settings.

3. A fuel level monitoring system (10) according to any preceding claim, wherein the control module (11) is configured to adjust at least one characteristic of the calibration setting in dependence on the calibration mode selection signal (22) to thereby change the calibration mode.

4. A fuel level monitoring system (10) according to any preceding claim, wherein the calibration mode selector (15) is configured to generate the calibration mode selection signal (22) in dependence on a command entered by an operator of the field vehicle (1).

5. A fuel level monitoring system (10) according to any preceding claim, wherein the calibration mode selector (16) is configured to generate the calibration mode selection signal (22) in dependence on an identified geographical area.

6. A fuel level monitoring system (10) according to any preceding claim, further comprising an interface system (12) that is configured to provide an indication of the current fuel level of the fuel tank (3) to an operator of the field vehicle in dependence on the output signal (21) indicative of the calibrated fuel level.

7. A field vehicle (1) comprising a fuel level monitoring system (10) according to any preceding claim.

8. A field vehicle (1) according to claim 7, wherein the field vehicle (1) is a forage harvester or a combine harvester.

9. A field vehicle (1) according to claim 7 , wherein the fuel tank (3) of the field vehicle (1) comprises a first storage chamber (3a) in which the fuel sensor (5) is located, and a second storage chamber (3b) that is in fluid communication with the first storage chamber (3a).

10. A method of monitoring a fuel level in a fuel tank (3) of a field vehicle (1), the method comprising:
measuring the level of fuel in the fuel tank (3) using a fuel level sensor (5);
selecting a calibration mode from a plurality of possible calibration modes having different calibration settings with different zero levels, wherein the calibration modes include at least one flat mode intended primarily for use in flat areas and at least one non-flat mode intended primarily for use in non-flat areas; and
operating an interface system (12) to provide an indication of the current fuel level of the fuel tank (3) to an operator of the field vehicle (1) in dependence on the measured fuel level and further in dependence on the calibration setting of the selected calibration mode.

11. A method according to Claim 10, wherein the calibration mode is selected manually by an operator of the field vehicle (1).

12. A method according to Claim 10, wherein the calibration mode is selected automatically in dependence on an identified geographical area.

13. A method according to any of Claims 10 to 12, wherein the step of providing an indication of the current fuel level of the fuel tank (3) comprises operating a display device (13) to display the current fuel level.

14. A non-transitory computer readable storage medium comprising computer readable instructions for a computer processor to carry out the method of any of Claims 10 to 13.

## Patentansprüche

1. Kraftstofffüllstand-Überwachungssystem (10) für ein Feldfahrzeug (1), wobei das Kraftstofffüllstand-Überwachungssystem umfasst:
einen Kraftstofffüllstandsensor (5), der dazu eingerichtet ist, ein Sensorsignal (20) zu erzeugen, das kennzeichnend für einen ermittelten Kraftstofffüllstand in einem Kraftstofftank (3) des Feldfahrzeugs (1) ist; und
eine Steuereinrichtung (11), die einen Eingang (11a), der zum Empfangen des Sensorsignals (20) eingerichtet ist, und einen Ausgang (11b) aufweist, der zum Erzeugen eines Ausgangssignals (21) in Abhängigkeit von dem ermittelten Kraftstofffüllstand eingerichtet ist;
**dadurch gekennzeichnet, dass**
das Kraftstofffüllstand-Überwachungssystem (10) des Weiteren eine Kalibriermodus-Auswahleinrichtung (15, 16) umfasst, die dazu eingerichtet ist, ein Kalibriermodus-Auswahlsignal (22) zu erzeugen, das kennzeichnend für einen ausgewählten Kalibriermodus ist, wobei die Kalibriermodi mindestens einen Flach-Modus, der im Wesentlichen zur Anwendung in flachen Gebieten vorgesehen ist, und mindestens einen Nicht-Flach-Modus umfassen, der im Wesentlichen zur Anwendung in nicht flachen Gebieten vorgesehen ist, wobei der Eingang (11a) der Steuereinrichtung (11) dazu eingerichtet ist, das Kalibriermodus-Auswahlsignal (22) zu empfangen, wobei die Steuereinrichtung (11) dazu eingerichtet ist, wahlweise zwischen einer Mehrzahl von Kalibriermodi zu wechseln, die in Abhängigkeit von dem Kalibriermodus-Auswahlsignal (22) unterschiedliche Kalibrierungseinstellungen aufweisen, und wobei der Ausgang (11b) der Steuereinrichtung (11) dazu eingerichtet ist, das Signal (21) auszugeben, das in Abhängigkeit von der Kalibrierungseinstellung des ausgewählten Kalibriermodus kennzeichnend für einen kalibrierten Kraftstofffüllstand ist, wobei die Kalibrierungseinstellungen der jeweiligen Kalibriermodi unterschiedliche Nullniveaus aufweisen.

2. Kraftstofffüllstand-Überwachungssystem (10) nach einem der vorhergehenden Ansprüche, wobei die Steuereinrichtung (11) die Kalibriermodi als diskret wählbare Kalibriermodi mit voreingestellten Kalibrierungseinstellungen speichert.

3. Kraftstofffüllstand-Überwachungssystem (10) nach einem der vorhergehenden Ansprüche, wobei die Steuereinrichtung (11) dazu eingerichtet ist, in Abhängigkeit von dem Kalibriermodus-Auswahlsignal (22) mindestens eine Charakteristik der Kalibrierungseinstellung anzupassen, um dadurch den Kalibriermodus zu ändern.

4. Kraftstofffüllstand-Überwachungssystem (10) nach einem der vorhergehenden Ansprüche, wobei die Kalibriermodus-Auswahleinrichtung (15) dazu eingerichtet ist, in Abhängigkeit von einem Befehl, der von einem Bediener des Feldfahrzeugs (1) eingegeben wurde, das Kalibriermodus-Auswahlsignal (22) zu erzeugen.

5. Kraftstofffüllstand-Überwachungssystem (10) nach einem der vorhergehenden Ansprüche, wobei die Kalibriermodus-Auswahleinrichtung (16) dazu eingerichtet ist, in Abhängigkeit von einem identifizierten geografischen Gebiet das Kalibriermodus-Auswahlsignal (22) zu erzeugen.

6. Kraftstofffüllstand-Überwachungssystem (10) nach einem der vorhergehenden Ansprüche, des Weiteren ein Schnittstellensystem (12) aufweisend, das dazu eingerichtet ist, einem Bediener des Feldfahrzeugs in Abhängigkeit von dem Ausgangssignal (21), das kennzeichnend für den kalibrierten Kraftstofffüllstand ist, eine Angabe des momentanen Kraftstofffüllstands des Kraftstofftanks (3) bereitzustellen.

7. Feldfahrzeug (1) mit einen Kraftstofffüllstand-Überwachungssystem (10) nach einem der vorhergehenden Ansprüche.

8. Feldfahrzeug (1) nach Anspruch 7, wobei das Feldfahrzeug (1) ein Feldhäcksler oder ein Mähdrescher ist.

9. Feldfahrzeug (1) nach Anspruch 7, wobei der Kraftstofftank (3) des Feldfahrzeugs (1) eine erste Speicherkammer (3a), in der sich der Kraftstoffsensor (5) befindet, und eine zweite Speicherkammer (3b) umfasst, die in Fluidverbindung mit der ersten Speicherkammer (3a) steht.

10. Verfahren zum Überwachen eines Kraftstofffüllstands in einem Kraftstofftank (3) eines Feldfahrzeugs (1), wobei das Verfahren umfasst:
Ermitteln des Kraftstofffüllstands in dem Kraftstofftank (3) mittels eines Kraftstofffüllstandsensors (5);
Wählen eines Kalibriermodus aus einer Mehrzahl von möglichen Kalibriermodi, die unterschiedliche Kalibrierungseinstellungen mit unterschiedlichen Nullniveaus aufweisen, wobei die Kalibriermodi mindestens einen Flach-Modus umfassen, der im Wesentlichen zur Anwendung in flachen Gebieten vorgesehen ist, und mindestens einen Nicht-Flach-Modus umfassen, der im Wesentlichen zur Anwendung in nicht flachen Gebieten vorgesehen ist; und
Bedienen eines Schnittstellensystems (12), um einem Bediener des Feldfahrzeugs (1) eine Angabe des momentanen Kraftstofffüllstands des Kraftstofftanks (3) bereitzustellen in Abhängigkeit von dem ermittelten Kraftstofffüllstand und des Weiteren in Abhängigkeit von der Kalibrierungseinstellung des ausgewählten Kalibriermodus.

11. Verfahren nach Anspruch 10, wobei der Kalibriermodus manuell von einem Bediener des Feldfahrzeugs (1) gewählt wird.

12. Verfahren nach Anspruch 10, wobei der Kalibriermodus automatisch in Abhängigkeit von einem identifizierten geografischen Gebiet gewählt wird.

13. Verfahren nach einem der Ansprüche 10 bis 12, wobei der Schritt des Bereitstellens einer Angabe des momentanen Kraftstofffüllstands des Kraftstofftanks (3) das Betätigen einer Anzeigevorrichtung (13) zum Anzeigen des momentanen Kraftstofffüllstands umfasst.

14. Nichtflüchtiges, computerlesbares Speichermedium, das computerlesbare Anweisungen für einen Computerprozessor umfasst, um ein Verfahren nach einem der Ansprüche 10 bis 13 auszuführen.

## Revendications

1. Système de surveillance de niveau de carburant (10) d'un véhicule de terrain (1), le système de surveillance de niveau de carburant comprenant :
un capteur de niveau de carburant (5) qui est configuré pour générer un signal de capteur (20) indicatif d'un niveau de carburant mesuré dans un réservoir de carburant (3) du véhicule de terrain (1) ; et
un module de commande (11) comprenant une entrée (11a) qui est configurée pour recevoir le signal de capteur (20) et une sortie (11b) qui est configurée pour générer un signal de sortie (21) en fonction du niveau de carburant mesuré ;
**caractérisé en ce que** le système de surveillance de niveau de carburant (10) comprend en outre un sélecteur de mode d'étalonnage (15, 16) qui est configuré pour générer un signal de sélection de mode d'étalonnage (22) indicatif d'un mode d'étalonnage sélectionné, dans lequel les modes d'étalonnage comprennent au moins un mode plat destiné principalement à être utilisé dans des zones plates et au moins un mode non plat destiné principalement à être utilisé dans des zones non plates, l'entrée (11a) du module de commande (11) étant configurée pour recevoir le signal de sélection de mode d'étalonnage (22), le module de commande (11) étant configuré pour commuter sélectivement entre une pluralité de modes d'étalonnage ayant différents paramètres d'étalonnage en fonction du signal de sélection de mode d'étalonnage (22) et la sortie (11b) du module de commande (11) étant configurée pour émettre le signal (21) indicatif d'un niveau de carburant étalonné en fonction du paramètre d'étalonnage du mode d'étalonnage sélectionné, dans lequel les paramètres d'étalonnage des modes d'étalonnage respectifs comprennent différents niveaux zéro.

2. Système de surveillance de niveau de carburant (10) selon l'une quelconque des revendications précédentes, dans lequel le module de commande (11) stocke les modes d'étalonnage en tant que modes d'étalonnage sélectionnables discrets avec des paramètres d'étalonnage prédéfinis.

3. Système de surveillance de niveau de carburant (10) selon l'une quelconque des revendications précédentes, dans lequel le module de commande (11) est configuré pour ajuster au moins une caractéristique du paramètre d'étalonnage en fonction du signal de sélection de mode d'étalonnage (22) pour changer ainsi le mode d'étalonnage.

4. Système de surveillance de niveau de carburant (10) selon l'une quelconque des revendications précédentes, dans lequel le sélecteur de mode d'étalonnage (15) est configuré pour générer le signal de sélection de mode d'étalonnage (22) en fonction d'une commande entrée par un opérateur du véhicule de terrain (1).

5. Système de surveillance de niveau de carburant (10) selon l'une quelconque des revendications précédentes, dans lequel le sélecteur de mode d'étalonnage (16) est configuré pour générer le signal de sélection de mode d'étalonnage (22) en fonction d'une zone géographique identifiée.

6. Système de surveillance de niveau de carburant (10) selon l'une quelconque des revendications précédentes, comprenant en outre un système d'interface (12) qui est configuré pour fournir une indication du niveau de carburant actuel du réservoir de carburant (3) à un opérateur du véhicule de terrain en fonction du signal de sortie (21) indicatif du niveau de carburant étalonné.

7. Véhicule de terrain (1) comprenant un système de surveillance de niveau de carburant (10) selon l'une quelconque des revendications précédentes.

8. Véhicule de terrain (1) selon la revendication 7, dans lequel le véhicule de terrain (1) est une récolteuse-hacheuse ou une moissonneuse-batteuse.

9. Véhicule de terrain (1) selon la revendication 7, dans lequel le réservoir de carburant (3) du véhicule de terrain (1) comprend une première chambre de stockage (3a) dans laquelle se situe le capteur de carburant (5), et une seconde chambre de stockage (3b) qui est en communication fluidique avec la première chambre de stockage (3a).

10. Procédé de surveillance d'un niveau de carburant dans un réservoir de carburant (3) d'un véhicule de terrain (1), le procédé comprenant les étapes suivantes :
mesurer le niveau de carburant dans le réservoir de carburant (3) en utilisant un capteur de niveau de carburant (5) ; sélectionner un mode d'étalonnage parmi une pluralité de modes d'étalonnage possibles ayant différents paramètres d'étalonnage avec différents niveaux zéro, dans lequel les modes d'étalonnage comprennent au moins un mode plat destiné principalement à être utilisé dans des zones plates et au moins un mode non plat destiné principalement à être utilisé dans des zones non plates ; et
faire fonctionner un système d'interface (12) pour fournir une indication du niveau de carburant actuel du réservoir de carburant (3) à un opérateur du véhicule de terrain (1) en fonction du niveau de carburant mesuré et en outre en fonction du paramètre d'étalonnage du mode d'étalonnage sélectionné.

11. Procédé selon la revendication 10, dans lequel le mode d'étalonnage est sélectionné manuellement par un opérateur du véhicule de terrain (1).

12. Procédé selon la revendication 10, dans lequel le mode d'étalonnage est sélectionné automatiquement en fonction d'une zone géographique identifiée.

13. Procédé selon l'une quelconque des revendications 10 à 12, dans lequel l'étape consistant à fournir une indication du niveau de carburant actuel du réservoir de carburant (3) comprend le fonctionnement d'un dispositif d'affichage (13) pour afficher le niveau de carburant actuel.

14. Support de sauvegarde lisible par ordinateur non transitoire comprenant des instructions lisibles par un ordinateur pour un processeur informatique afin d'exécuter le procédé selon l'une quelconque des revendications 10 à 13.
